# EUROPÄISCHE PATENTANMELDUNG

(11) **EP 1 985 439 A1**
(43) Veröffentlichungstag der Anmeldung: **29.10.2008**
(21) Anmeldenummer: 07008320.9
(22) Anmeldetag: 24.04.2007
(51) Int. Cl.: B32B 15/01, F01N 7/10, F02B 77/11, F16L 59/02, G10K 11/16

(54) **Hitzeschild**

(71) Anmelder: REINZ-Dichtungs-GmbH, 89233 Neu-Ulm (DE)
(72) Erfinder: Egloff, Georg, 89264 Weissenhorn (DE); Gloeggler, Alexander, 89160 Tomerdingen (DE); Schweiggart, Franz, 89284 Pfaffenhofen (DE)
(74) Vertreter: Tomerius, Isabel

(57) **Zusammenfassung**

Die Erfindung betrifft einen Hitzeschild zum Abschirmen eines Gegenstandes gegen Hitze und/oder Schall mit wenigstens einer Metalllage und wenigstens einer durch die wenigstens eine Metalllage hindurch gehenden Öffnung zur Aufnahme eines Befestigungsmittels. Auf wenigstens einer der Oberflächen der wenigstens einen Metalllage ist bereichsweise eine Oberflächenstrukturierung vorgesehen, in deren Bereich die Metalllage eine Dicke aufweist, die größer ist als ihre originäre Dicke. Die Oberflächenstrukturierung ist als sich ringförmig um die Öffnung erstreckender Bereich von sich abwechselnden Vertiefungen und Erhebungen ausgebildet, die auf wenigstens einer Schar im Wesentlichen parallel über die Gesamtausdehnung der Oberflächenstrukturierung verlaufender virtueller gerader Linien angeordnet sind.

## Beschreibung

Die Erfindung betrifft einen Hitzeschild zum Abschirmen eines Gegenstandes gegen Hitze und/oder Schall mit wenigstens einer Metalllage und wenigstens einer durch die wenigstens eine Metalllage hindurch gehenden Öffnung zur Aufnahme eines Befestigungsmittels. Auf wenigstens einer der Oberflächen der wenigstens einen Metalllage ist bereichsweise eine Oberflächenstrukturierung vorgesehen, in deren Bereich die Metalllage eine Dicke aufweist, die größer ist als ihre originäre Dicke.

Derartige Hitzeschilde werden als Schall- und/oder Hitzeschutz für andere Bauteile verwendet. Hitzeschilde werden beispielsweise in Motorräumen von Kraftfahrzeugen eingesetzt, insbesondere im Bereich der Abgasanlage, um benachbarte temperaturempfindliche Bauteile und Aggregate gegenüber unzulässiger Erhitzung zu schützen. Oft dienen die Hitzeschilde dabei gleichzeitig als Schallschutz. Häufig besteht ein Hitzeschild aus zwei metallischen Lagen mit einer zwischen diesen angeordneten nichtmetallischen Isolationsschicht zur Verbesserung der Dämpfungseigenschaften. Die Isolationsschicht besteht beispielsweise aus Glimmer, temperaturstabilem Papier, anorganischen oder organischen Faserverbundmaterialien oder anderen geeigneten Dämmstoffen. Die metallischen Lagen bestehen üblicherweise aus Stahl, aluminiumplattiertem Stahl oder Aluminium.

Für Hitzeschilde steht beim Einbau häufig nur sehr wenig Platz zur Verfügung. Aufgrund der Vibrationen während des Betriebs können die Hitzeschilde beschädigt werden, da sie - auch im Hinblick auf die Material- und Gewichtseinsparung - so dünn wie möglich ausgelegt werden. Es bestand daher Bedarf an einem Hitzeschild, der bei möglichst geringem Materialverbrauch und geringem Gewicht dennoch möglichst stabil ist und guten Schall- und Hitzeschutz bietet.

Ein weiterer Nachteil besteht darin, das Hitzeschilde in Abhängigkeit von den verwendeten Materialien voneinander abweichende Gesamtdicken aufweisen. Diese Abweichungen wiederum erfordern für jeden Hitzeschild unterschiedliche Befestigungsmittel, Dämpfungselemente zum Einbau zwischen Hitzeschild und dem Bauteil, an dem der Hitzeschild befestigt werden soll, oder sonstige für den Einbau benötigte Teile. Es bestand daher ein Bedarf daran, die Einbausituation von Hitzeschilden aus unterschiedlichsten Ausgangsmaterialien zu vereinheitlichen.

**Aufgabe** der Erfindung ist es entsprechend, einen Hitzeschild anzugeben, der die obigen Nachteile nicht aufweist.

Die Lösung dieser Aufgabe gelingt mit dem Hitzeschild gemäß Anspruch 1. Bevorzugte Weiterbildungen sind in den Unteransprüchen beschrieben.

Die Erfindung betrifft also einen Hitzeschild zum Abschirmen eines Gegenstandes gegen Hitze und/oder Schall mit wenigstens einer Metalllage und wenigstens einer durch die wenigstens eine Metalllage hindurch gehenden Öffnung zur Aufnahme eines Befestigungsmittels. Auf wenigstens einer der Oberflächen der wenigstens einen Metalllage ist bereichsweise eine Oberflächenstrukturierung vorgesehen, in deren Bereich die Metalllage eine Dicke aufweist, die größer ist als ihre originäre Dicke. Die Oberflächenstrukturierung ist als sich ringförmig um die Öffnung erstreckender Bereich von sich abwechselnden Vertiefungen und Erhebungen ausgebildet, die auf wenigstens einer Schar im Wesentlichen parallel über die Gesamtausdehnung der Oberflächenstrukturierung verlaufender virtueller gerader Linien angeordnet sind.

Unter einem ringförmigen Bereich soll hier ein kontinuierlich um die Öffnung für das Befestigungsmittel herum verlaufender Bereich verstanden werden, der - abgesehen davon, dass er in sich geschlossen ausgebildet ist - eine beliebige Form aufweisen kann. Es kann sich in einer einfachen Variante beispielsweise um einen Kreisring gleichmäßiger Breite handeln. Eine solche Form bietet sich besonders bei kreisförmigen Öffnungen an, die dann im Zentrum des ringförmigen Bereiches liegen. Es sind aber auch Formen mit exzentrischer Anordnung der Befestigungsmittelöffnung und entsprechend unterschiedlicher Breite des strukturierten Bereiches um die Öffnung herum möglich. Bei nicht runden Öffnungen kann der ringförmige Bereich mit gleichbleibender oder auch mit in Umlaufrichtung variierender Breite um die Öffnung umlaufen. Bevorzugt ist es in allen Fällen, dass der mit der Oberflächenstrukturierung versehene Bereich so dicht an die Öffnung heranreicht, dass der von dem Befestigungsmittel auf die Metalllage des Hitzeschildes wirkende Zusammenspanndruck auf den ringförmigen, strukturierten Bereich einwirkt. Falls erforderlich, kann zu diesem Zweck auch ein Befestigungsmittel wie eine Schraube oder ein Bolzen mit einem Kopf mit vergrößerter Auflagefläche oder eine zusätzliche Unterlegscheibe verwendet werden. Innen- und/oder Außenkontur des ringförmigen Bereiches können auch unregelmäßig ausgebildet sein. Der Konturverlauf richtet sich dabei zweckmäßig - vor allem, was die Außenkontur betrifft - nach den räumlichen Gegebenheiten des Hitzeschildes. Beispielsweise kann es sinnvoll sein, den Verlauf der Außenkontur so zu wählen, dass die Oberflächenstrukturierung sich nicht in solche Bereiche der Metalllage erstreckt, die im fertigen Hitzeschild sehr stark räumlich verformt sind.

Die Breite des ringförmigen Bereiches kann also, je nach den Gegebenheiten, wie zum Beispiel der Form des Hitzeschildes, recht unterschiedlich sein. Zweckmäßig ist der ringförmige Bereich jedoch zumindest so breit, dass er die durch das Befestigungsmittel ausgeübten Zusammenspannkräfte hinreichend aufnehmen kann. Geeignete Breiten, gemessen in Radialrichtung um die Öffnung für das Befestigungsmittel, liegen in der Regel bei 0,4 bis 5 cm, bevorzugt 0,6 bis 2,5 cm und insbesondere 0,8 bis 2 cm. Bei sich in Umfangsrichtung unterscheidenden Breiten liegt die Breite bevorzugt an jeder beliebigen Stelle in den genannten Bereichen.

Im ringförmigen Bereich besitzt die Metalllage durch die Oberflächenstrukturierung eine größere Dicke als die Dicke der originären Metalllage, d.h., der planen Metalllage vor Einbringen der Oberflächenstrukturierung. Die Dicke der Metalllage wird dabei als Abstand zwischen zwei Tangentialebenen gemessen, die jeweils parallel zur Ebene der nicht verformten Metalllage verlaufen und an gegenüberliegenden Seiten an den Oberflächen der Metalllage anliegen. Die Dicke im oberflächenstrukturierten Bereich bemisst sich also in keinem Fall ausgehend von Vertiefungen in der Oberfläche, sondern von den dort vorhandenen Erhebungen. Weist nur eine der Oberflächen der Metalllage eine Oberflächenstrukturierung auf, wird der Abstand also zwischen der Ebene der unbehandelten Metalllage und einer Ebene gemessen, die auf der gegenüberliegenden Seite der Metalllage an den Erhebungen anliegt. Bei einer beidseitig oberflächenstrukturierten Metalllage wird der Abstand zwischen zwei Ebenen gemessen, die jeweils an den Erhebungen der entsprechenden Seite der Metalllage anliegen. Dabei muss die Höhe der Erhebungen nicht über den gesamten ringförmigen Bereich gleich hoch sein. Da die Erhebungen jedoch zumindest auf einer Seite über die unbehandelte Oberfläche der Metalllage herausstehen, ist die Dicke der Metalllage im ringförmigen Bereich in jedem Fall größer als die originäre Dicke der unbehandelten Metalllage. Vertiefungen sind gegenüber den Erhebungen niedrigere Bereiche, also nicht unbedingt Bereiche, die in die Oberfläche der unverformten Metalllage eingetieft sind.

Der mit der Oberflächenstrukturierung versehene ringförmige Bereich auf wenigstens einer Oberfläche der Metalllage im Bereich um eine Befestigungsmittelöffnung herum führt in diesem Bereich zu einer erhöhten Bauteilsteifigkeit, die sich vorteilhaft auf das Vibrations- und Schwingungsverhalten des Hitzeschildes auswirkt. Auch während des Betriebs des eingebauten Hitzeschildes wirken über die Befestigungsmittel übertragene Schwingungen besonders stark auf den Bereich um die Befestigungsmittel ein. Die Oberflächenstrukturierung in diesem Bereich verhindert hier wirksam eine Beschädigung.

Durch Verwendung der Oberflächenstrukturierung lässt sich auch Material und Gewicht einsparen, da sich allein durch Herausformen von Material aus einer dünneren Metalllage eine größere Materialstärke im ringförmigen Bereich erzeugen lässt, ohne dass dafür zusätzliches Material benötigt wird. Die Oberflächenstrukturierung kann also auch als Ersatz für eine zusätzliche Blechauflage zur Materialverstärkung dienen und somit Kosten bei der Herstellung einsparen. Häufig besteht ein Hitzeschild aus zwei Metalllagen mit einer zwischen diesen angeordneten nichtmetallischen Isolationsschicht. Im Bereich der Ränder des Hitzeschilds oder um Öffnungen herum ist die Isolationsschicht häufig störend. Lässt man sie jedoch einfach weg, verringert sich die Gesamtdicke des Hitzeschildes in diesem Bereich, was ebenfalls oft unerwünscht ist. Mittels des verdickten ringförmigen Bereichs kann jedoch erfindungsgemäß um die Befestigungsmittelöffnungen herum ein Dickenausgleich geschaffen werden, sodass die Isolationsschicht hier ausgespart werden kann.

Ein weiterer Vorteil besteht darin, dass über die Höhe der Oberflächenstrukturierung gezielt die Dicke des Hitzeschildes im Bereich um die Befestigungsmittelöffnungen eingestellt werden kann - und zwar weitgehend unabhängig von der Materialstärke der unstrukturierten Metalllage. Dies bedeutet, dass für verschiedenste Ausgangsmaterialien eine weitgehend gleichbleibende Einbausituation geschaffen wird. Konkret gesagt, bleibt die Gesamtdicke der Hitzeschilde im Bereich um die Befestigungsmittelöffnungen gleich, während sich die Gesamtdicke in den übrigen Bereichen aufgrund der Verwendung unterschiedlicher Ausgangsmaterialien voneinander unterscheiden kann. Damit können für unterschiedliche Typen von Hitzschilden jeweils die gleichen Befestigungsmittel, Dämpfungselemente, Schiebesitze oder sonstige Einbauteile verwendet werden. Dies erleichtert die Vorratshaltung an solchem Zubehör erheblich. Beispielsweise ist es üblich, zwischen Hitzeschild und dem Bauteil, an dem der Hitzeschild befestigt wird, um das Befestigungsmittel herum ein Dämpfungselement wie ein Drahtkissen anzuordnen. Oft wird dabei zwischen Befestigungsmittel und Dämpfungselement noch eine Hülse eingesetzt. Ändert sich die Gesamtdicke der Hitzeschilde im Bereich um die Befestigungsmittel müssen für eine vorgegebene Einbausituation auch die Dicke des Drahtkissens und die Länge der Hülse geändert werden. Bei erfindungsgemäßen Hitzeschilden ist dies nicht erforderlich, da Unterschiede im Material der Hitzeschilde durch entsprechende Aufdickung im Bereich um die Befestigungsmittelöffnungen ausgeglichen werden, sodass die Gesamtdicke in diesem Bereich unverändert bleibt.

Die Oberflächenstrukturierung, die zur angesprochenen Materialverdickung führt, besteht erfindungsgemäß aus Vertiefungen und Erhebungen, die abwechselnd zueinander angeordnet sind und auf wenigstens einer Schar im Wesentlichen parallel verlaufender gerader Linien liegen. Diese geraden Linien verlaufen über die gesamte Ausdehnung der Oberflächenstrukturierung in der Erstreckungsrichtung der Vertiefungen durchgehend. Dies bedeutet, dass Vertiefungen und Erhebungen über die gesamte von der Oberflächenstrukturierung eingenommene Fläche sehr regelmäßig verteilt sind, was die Herstellung der Oberflächenstrukturierung, insbesondere der hierzu benötigten Werkzeuge, sehr erleichtert. Bei der Schar im Wesentlich parallel verlaufender gerader Linien handelt es sich um virtuelle Linien. Diese Linien setzen sich zwar über die gesamte Fläche der Oberflächenstrukturierung fort, jedoch müssen nicht zwangsläufig an jeder Stelle dieser Linien auch Erhebungen oder Vertiefungen vorhanden sein. Beispielsweise können die virtuellen Linien die Befestigungsmittelöffnung schneiden. In einem solchen Fall verlaufen Erhebung(en) und/oder Vertiefung(en) auf einer virtuellen geraden Linie bis an die Öffnung heran, werden dort unterbrochen und setzen sich dann auf der gegenüberliegenden Seite der Öffnung auf derselben geraden Linie weiter fort. Die Schar im Wesentlichen parallel verlaufender gerader Linien ist also grundsätzlich über die gesamte Fläche der Metalllage gezogen, während die Erhebungen und Vertiefungen der Oberflächenstrukturierung diesen Linien nur in dem ringförmigen Bereich folgen. Die Erhebungen sind jeweils durch Vertiefungen voneinander getrennt. Unter einem im Wesentlichen parallelen Verlauf soll hier eine Abweichung von der Parallelität von maximal 5 ° und insbesondere maximal 2 ° verstanden werden.

In einer ersten Ausführungsform des erfindungsgemäßen Hitzeschildes verlaufen die Erhebungen entlang nur einer Schar paralleler Linien. Dabei kann auf einer Linie nur eine Erhebung vorgesehen sein und auf einer benachbarten Linie nur eine Vertiefung, so dass die Oberflächenstrukturierung aus parallel zueinander angeordneten, linear verlaufenden Vertiefungen mit dazwischen liegenden erhöhten Rippen gebildet wird und eine wellenartige Struktur aufweist. Die Vertiefungen sind dabei bevorzugt mit gleicher Breite in gleichem Abstand zueinander angeordnet, und die Rippen sind entsprechend bevorzugt gleich breit. Es können jedoch auch unterschiedliche Abstände zwischen den Vertiefungen und unterschiedliche Vertiefungs- und Rippenbreiten gewählt werden.

Vertiefungen und Erhebungen können sich in Erstreckungsrichtung der geraden Linien auch abwechseln. Dabei sind Vertiefungen und Erhebungen auf zueinander benachbarten Linien bevorzugt jeweils versetzt zueinander angeordnet, so dass auch quer zur Erstreckungsrichtung der geraden Linien sich Erhebungen und Vertiefungen abwechseln.

In einer anderen Ausbildungsform der Erfindung sind die Vertiefungen entlang mehrerer sich schneidender Scharen virtueller gerader Linien angeordnet. Die sich schneidenden Vertiefungen ergeben zwischen ihnen angeordnete Erhebungen, die sich nicht wie bei der wellenartigen Oberflächenstrukturierung durchgängig über den gesamten ringförmigen Bereich erstrecken, sondern nur Teilabschnitte einnehmen. Bevorzugt bilden die sich schneidenden Linien einen Winkel von 30 bis 150 °, bevorzugt 45 bis 135 °, besonders bevorzugt 80 bis 100 ° und insbesondere 90 ° zueinander. In letzterem Fall ergibt sich ein schachbrettartiges Muster der Oberflächenstrukturierung. Bevorzugt verlaufen die Erhebungen auf zwei sich schneidenden Scharen paralleler Linien. Es ist jedoch auch möglich, dass die Vertiefungen auf drei Scharen virtueller gerader Linien verlaufen, die sich bevorzugt in einem Winkel von 60 ° schneiden. In allen Fällen ergibt sich ein netzartiges Muster der Oberflächenstrukturierung.

Die Vertiefungen können auch so angeordnet sein, dass sie auf mehr als drei Scharen virtueller gerader Linien verlaufen. Entsprechend ist eine Vielzahl von Formen der Vertiefungen und der zwischen ihnen liegenden Erhöhungen möglich. Auch die Querschnittsformen der Vertiefungen und Erhöhungen können sehr variabel gestaltet werden. Beispielsweise kann der Querschnitt in einer zur Erstreckungsrichtung der zugehörigen virtuellen Linie senkrechten Richtung trapezförmig, dreieckig, gerundet oder rechteckig ausgebildet sein. Aus Gründen der leichteren Herstellbarkeit weisen zweckmäßig alle Vertiefungen den gleichen Querschnitt auf. Es können jedoch auch Kombinationen verschiedener Querschnitte gewählt werden. Auch die Tiefe der Vertiefungen (bzw. die Höhe der Erhöhungen) kann variieren. Bevorzugt werden jedoch auch hier für alle Vertiefungen gleiche Tiefen gewählt. Dabei ist unter der Tiefe der Abstand zwischen dem höchsten Punkt der benachbarten Erhebung und dem tiefsten Punkt der Vertiefung zu verstehen, gemessen in einer Richtung senkrecht zur Ebene der Metalllage.

Entsprechende Variationsmöglichkeiten gibt es auch für Form und Abmessung der Erhebungen im oberflächenstrukturierten Bereich. Das Querschnittsprofil der Erhebungen kann beispielsweise kuppenförmig, rechteckig, dreieckig oder trapezförmig sein. Eine bevorzugte Form einer Erhebung ist der Polyederstumpf, wobei die Winkel der Grundseiten zueinander bevorzugt zwischen 70 und 140 ° und insbesondere zwischen 90 und 120 ° liegen. Bevorzugt sind Stümpfe mit dreieckiger, quadratischer oder rechteckiger Grundfläche. Die Seitenlänge an der Grundfläche des Polyederstumpfes liegt zwischen 1 und 3 mm, bevorzugt zwischen 1,5 und 2,5 mm und insbesondere zwischen 1,6 und 2,0 mm, die Länge der oberen Kanten des Polyederstumpfes bei 0,1 bis 0,5 mm und bevorzugt bei 0,2 bis 0,3 mm.

Insgesamt sind Oberflächenstrukturierungen bevorzugt, die zu einer deutlichen Erhöhung der Steifigkeit der Metalllage im ringförmigen Bereich, verglichen zur unstrukturierten Metalllage, führen. Die erhöhte Steifigkeit sollte Verbiegungen und Verwindungen des Hitzeschildes in diesem Bereich sowohl beim Einbau als auch während des Betriebs weitestgehend verhindern. Hierfür eignen sich am besten relativ kleinteilige Strukturen, zum Beispiel solche, bei denen der Abstand zwischen den Scheitelpunkten benachbarter Erhebungen in einem Bereich von 1 bis 4 mm, bevorzugt 1,5 bis 3 mm und insbesondere 1,6 bis 2,5 mm liegt. Besitzen die Erhebungen abgeplattete Scheitelbereiche, werden die kürzestmöglichen Abstände zwischen den jeweiligen Mittelpunkten der Scheitelbereiche gemessen. Bei unterschiedlich hohen Erhebungen misst man den Abstand der Projektion des einen Scheitelpunktes in die Ebene des anderen Scheitelpunktes von eben diesem anderen Scheitelpunkt.

Während die Erhebungen über den gesamten ringförmigen Bereich eine gleiche Höhe aufweisen können, ist es - wie erwähnt - auch möglich, dass die Erhebungen sich in ihrer Höhe unterscheiden. Ein solches Höhenprofil kann zum Beispiel als Ausgleich für eine bereits im ringförmigen Bereich beginnende dreidimensionale Verformung des Hitzeschildes geschaffen werden. Die Höhe der Erhebungen kann schon bei Herausarbeiten der Erhebungen aus der Metalllage eingestellt werden oder dadurch, dass die erzeugten Erhebungen nach ihrer Herstellung abschnittsweise oder über den gesamten Bereich oder nur einen Teilbereich der Oberflächenstrukturierung planiert oder justiert werden.

Die erfindungsgemäß vorgesehene Oberflächenstruktur in dem erfindungsgemäßen Hitzeschild wird zweckmäßig durch Prägen der Metalllage erzeugt. Während des Prägevorgangs treten Scherkräfte im metallischen Material auf, die zu einer Kaltverfestigung führen und damit die Steifigkeit der Metalllage zusätzlich zu den durch die Strukturierung hervorgerufenen Wirkungen erhöhen. Die Prägetiefe liegt zweckmäßig zwischen 0,4 und 1 mm, bevorzugt 0,65 und 0,9 mm und insbesondere zwischen 0,75 und 0,85 mm. Hierbei ist anzumerken, dass die Prägetiefe nicht identisch ist mit der Höhe der durch das Prägen gebildeten Erhebungen. Letztere wird vielmehr üblicherweise geringer sein, da die Erhebungen auf der gegenüberliegenden Seite der Metalllage durch die Metalllage hindurch - und entsprechend in etwa um deren Dicke verringert - aus dieser herausgeprägt werden. Gleichzeitig verschwimmen aufgrund des "Durchprägens" auch die Außenkonturen der Erhebungen im Vergleich zu denen des Prägewerkzeugs. Wenn vorstehend von Pyramiden- oder Prismenstümpfen oder ähnlichen Formen als Erhebungen die Rede war, soll dies auch solche Formen mit abgerundeten Kanten einschließen.

Alternativ kann die Oberflächenstrukturierung auch auf andere Weise als durch Prägen erzeugt sein, beispielsweise durch Tiefziehen, Fließpressen oder sonstiges Materialverdrängen, wobei Material aus den erzeugten Vertiefungen seitlich verdrängt wird und so die Erhebungen ergibt. Unabhängig von der Art der Herstellung wird die Oberflächenstrukturierung bevorzugt in einer planen Metalllage erzeugt, die erst anschließend dreidimensional in die endgültige Form des Hitzeschildes verformt wird. Da die strukturierten Bereiche vergleichsweise steif und schlecht verformbar sind, wird die Oberflächenstrukturierung zweckmäßig nicht in solchen Bereichen vorgesehen, die besonders stark dreidimensional verformt werden sollen.

Die Erhebungen der Oberflächenstrukturierung können nur zu einer Seite der Metalllage über deren Oberfläche vorstehen oder auch zu beiden Seiten. In letzterem Fall können die Erhebungen den Erhebungen der anderen Oberfläche entgegengesetzt angeordnet sein, oder das O-berflächenstrukturmuster kann so versetzt sein, dass Erhebungen Vertiefungen der Gegenseite gegenüber zu liegen kommen. Es können auch jeweils voneinander verschiedene Oberflächenstrukturmuster auf den beiden Seiten der Metalllage miteinander kombiniert werden. Zudem ist es grundsätzlich auch möglich, die Oberflächenstrukturierung auf wenigstens einer der Oberflächen der Metalllage zusätzlich außerhalb des ringförmigen Bereiches vorzusehen, falls gewünscht auch über die gesamte Oberfläche. Im Allgemeinen ist dies aber nicht bevorzugt, da dies insbesondere beim Prägen der Oberflächenstrukturierung eine zu hohe Prägekraft erfordern würde. Durch großflächige Strukturierung können weit ausgedehnte Materialverdickungen bei Verwendung relativ wenigen Ausgangsmaterials bei gleichzeitig hoher Schall- und Wärmedämmung erzielt werden. Die Bauteilsteifigkeit ist ebenfalls höher als bei einem entsprechenden Ausgangsmaterial ohne Oberflächenstrukturierung.

Die Erfindung eignet sich sowohl für einlagige Hitzeschilde als auch für mehrlagige. Dabei kann nur eine der Metalllagen auf einer oder beiden Oberflächen wenigstens einen oberflächenstrukturierten Bereich aufweisen, oder die oberflächenstrukturierten ringförmigen Bereiche sind in mehr als einer Metalllage vorhanden. Weist der Hitzeschild mehr als eine Befestigungsmittelöffnung auf, sind zweckmäßig alle mit ringförmigen, eine Oberflächenstrukturierung aufweisenden Bereichen umgeben. Dabei ist es möglich, ringförmige Bereiche auf zwei benachbarte Metalllagen so zu verteilen, dass diese sich entweder in ihrer Fläche und/oder in ihrer Gesamthöhe ergänzen. Eine Aufsummierung der Dicken der Oberflächenstrukturierung auf zwei benachbarten Metalllagen kann vor allem dann sinnvoll sein, wenn eine sehr große Dickenerhöhung im oberflächenstrukturierten Bereich erzielt werden soll, das zur Materialaufdickung erforderliche Material aber nicht aus einer einzigen Metalllage herausgeformt werden kann. Die Art der Oberflächenstrukturierung in den verschiedenen Metalllagen kann dabei gleich oder verschieden voneinander sein. Bei komplementären Oberflächenstrukturen benachbarter Oberflächen ist es möglich, dass diese teilweise ineinander greifen. Es sind aber auch nicht-komplementäre oder partiell-komplementäre Oberflächenstrukturen bei benachbarten Oberflächen einsetzbar.

Die Erfindung kann auf verschiedenste ein- oder mehrlagige Hitzeschilde angewendet werden. Auf dreilagige Hitzeschilde mit zwei außenliegenden Metalllagen und einer zwischen diesen angeordneten nichtmetallischen Isolationsschicht wurde bereits hingewiesen. Besitzen die innenliegenden Oberflächen der Metalllagen oberflächenstrukturierte Bereiche, kann sich das auf die Anbindung der Isolationsschicht, auf das Kopplungsverhalten und die Dämpfungseigenschaften positiv auswirken. Als Materialien können die bisher üblichen eingesetzt werden. Die metallischen Lagen bestehen üblicherweise aus Stahl, aluminiumplattiertem Stahl oder Aluminium. Für die Isolationsschicht werden beispielsweise Glimmer, temperaturstabiles Papier, anorganische oder organische Faserverbundmaterialien oder andere geeignete Dämmstoffe eingesetzt.

Die Erfindung kann grundsätzlich für alle Arten von Hitzeschilden Anwendung finden, zum Beispiel für solche, die in Motorräumen von Kraftfahrzeugen eingesetzt werden, insbesondere im Bereich der Abgasanlage, um benachbarte temperaturempfindliche Bauteile und Aggregate gegenüber unzulässiger Erhitzung und /oder Schall zu schützen. Konkret können die Hitzeschilde beispielsweise zum Abschirmen eines Katalysators oder Vorkatalysators, eines Partikelfilters, eines Oxidationskatalysators oder sonstiger Komponenten im Bereich des Abgasstrangs oder eines Turboladers eingesetzt werden.

Die Erfindung soll nachfolgend unter Bezug auf eine Zeichnung näher beschrieben werden. Die gezeigten Beispiele sind jedoch lediglich zur Erläuterung gedacht; die Erfindung ist nicht auf sie beschränkt. In den Figuren, in denen gleiche Teile mit gleichen Bezugszeichen bezeichnet sind, zeigen schematisch:
- Figur 1:: ein erstes Ausführungsbeispiel eines erfindungsgemäßen Hitzeschildes in Draufsicht;
- Figur 2:: eine Draufsicht auf ein zweites Ausführungsbeispiel eines erfindungsgemäßen Hitzeschildes;
- Figur 3:: eine Teil-Querschnittsdarstellung des in Figur 2 gezeigten Hitzeschildes entlang der Linie X-X;
- Figur 4:: ein weiteres Ausführungsbeispiel eines erfindungsgemäßen Hitzeschildes in Teil-Querschnittsansicht;
- Figuren 5 bis 7:: Teil-Querschnittsansichten von mehrlagigen Hitzeschilden in einem mit Oberflächenstrukturierungen versehenen Bereich;
- Figur 8:: ein weiteres Ausführungsbeispiel eines zweilagigen Hitzeschildes, bei dem eine Oberflächenstrukturierung in einem Bereich entfernt von einer Befestigungsmittelöffnung vorgesehen ist;
- Figur 9:: eine Querschnittsansicht durch einen weiteren zweilagigen Hitzeschild und
- Figur 10:: eine Teildraufsicht auf ein Beispiel eines oberflächenstrukturierten Bereiches eines Hitzeschildes.

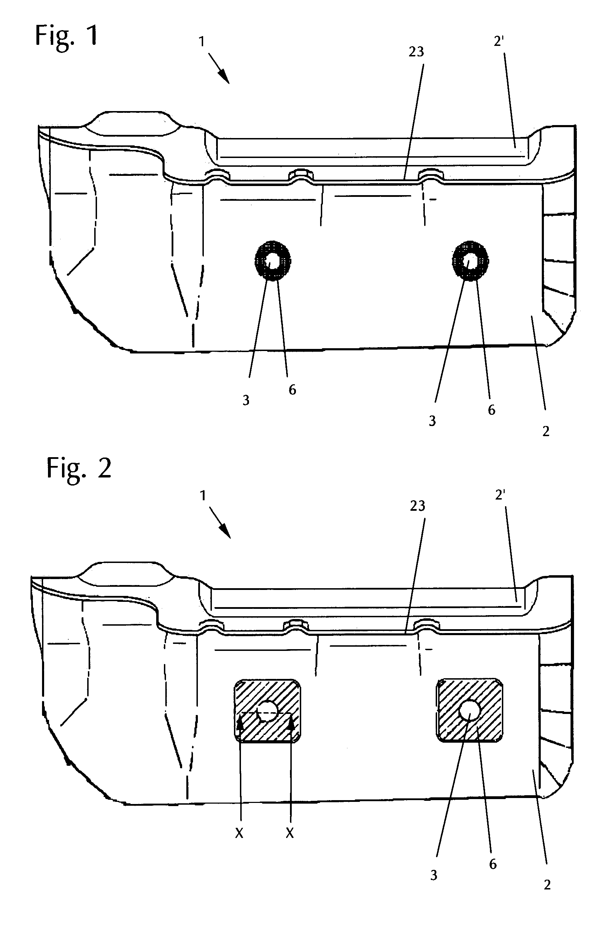

Figur 1 zeigt eine Draufsicht auf ein erstes Beispiel eines erfindungsgemäßen Hitzeschildes 1, der beispielsweise im Bereich eines Abgasstranges eines Verbrennungsmotors verwendet werden kann. Der in der Figur obere Bereich des Hitzeschildes 1 ist bezüglich der übrigen Fläche des Hitzeschildes, die im Wesentlichen in der Papierebene liegt, in Richtung auf den Betrachter zu umgebogen, um auf diese Weise beispielsweise ein Abgasrohr oder ähnliches zu umschließen. Der Hitzeschild 1 besteht aus zwei metallischen Lagen 2 und 2', die beispielsweise durch Umfalzen der Außenränder einer der Metalllagen um die Außenkante 23 herum auf die andere Metalllage miteinander verbunden sein können. Zwischen den Metalllagen 2 und 2', die zum Beispiel jeweils aus Aluminium bestehen, kann eine in der Figur nicht sichtbare nichtmetallische Isolationsschicht, beispielsweise aus wärmeisolierender Pappe oder Glimmer, angeordnet sein.

Zur Befestigung des Hitzeschildes 1 an einem Karosserie- oder Motorbauteil, insbesondere am Abgaskrümmer, sind zwei Öffnungen 3 vorgesehen. Durch diese Öffnungen 3 hindurch wird ein Befestigungsmittel wie beispielsweise eine Schraube geführt und an einem Motor- oder Karosseriebauteil befestigt. Dabei kann in an sich bekannter Weise zwischen Hitzeschild und Motor- oder Karosseriebauteil noch ein Dämpfungselement wie beispielsweise ein Drahtkissen im Bereich eines der oder aller Befestigungsmittel angebracht werden, um die Übertragung von Vibrationen auf den Hitzeschild zu vermindern.

Erfindungsgemäß sind um die Befestigungsmittelöffnungen 3 herum ringförmige Bereiche 6 vorhanden, die jeweils mit einer Oberflächenstrukturierung versehen sind. Im Hitzeschild gemäß Figur 1 sind die ringförmigen Bereiche 6 kreisringförmig ausgebildet. In Figur 2 dagegen weisen die ringförmigen Bereiche 6 eine in etwa quadratische Außenkontur mit gerundeten Ecken auf. Ansonsten unterscheidet sich der in Figur 2 dargestellte Hitzeschild nicht von demjenigen der Figur 1. Die ringförmigen Bereiche 6 mit der Oberflächenstrukturierung schließen sich jeweils praktisch abstandslos an die kreisförmigen Öffnungen 3 an. Die Öffnungen 3 dienen hier zur Aufnahme jeweils einer Schraube als Befestigungsmittel.

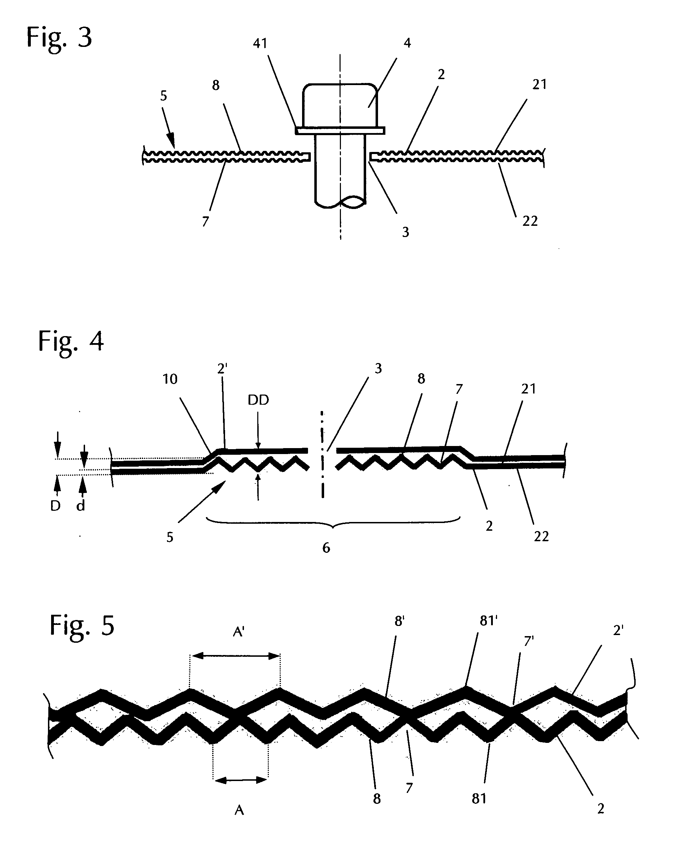

Figur 3 zeigt einen Querschnitt entlang der Linie X-X in Figur 2. Eine Schraube 4 wird so in die Öffnung 3 eingesteckt, dass ihr Teller 41 nach dem Festziehen der Schraube auf der Oberflächenstrukturierung 5 aufliegt, mit der die Metalllage 2 auf ihren beiden Oberflächen 21 und 22 versehen ist. Die Oberflächenstrukturierung 5 besteht aus einander abwechselnden Vertiefungen 7 und Erhebungen 8, die sich über den gesamten ringförmigen Bereich 6 in Form eines kontinuierlichen Wellenmusters erstrecken. Dabei verlaufen alle Vertiefungen 7 und alle Erhebungen 8 entlang paralleler Linien über den gesamten ringförmigen Bereich 6, wie dies in Figur 2 mit den schrägen Linien angedeutet ist. Erhebungen und Vertiefungen werden lediglich durch die Öffnung 3 unterbrochen. Die Oberflächenstrukturierung 5 ist so ausgebildet, dass Vertiefungen 7 auf der einen Oberfläche (21 oder 22) Erhebungen 8 auf der anderen Oberfläche (22 oder 21) der Metalllage 2 gegenüberliegen. Ein derartiges Strukturmuster kann beispielsweise durch Prägen der Metalllage zwischen zwei Prägeformen erhalten werden, die jeweils mit einer Wellenstruktur-Prägefläche versehen sind. Die Oberflächenstrukturierung 5 führt zu einer Materialaufdickung im ringförmigen Bereich 6, verglichen zur Materialdicke der nicht geprägten Metalllage 2.

Diese Materialaufdickung wird in Figur 4 verdeutlicht. Figur 4 zeigt erneut eine Querschnittsdarstellung eines erfindungsgemäßen Hitzeschildes im Bereich um eine Befestigungsmittelöffnung 3. Auch diese wird von einem ringförmigen Bereich 6 umgeben, in dem eine Oberflächenstrukturierung 5 vorhanden ist, hier in Form einer zickzackförmigen Prägung mit Vertiefungen 7 und Erhebungen 8, die jeweils einen dreieckigen Querschnitt aufweisen. Die Oberflächenstrukturierung steht über die Oberfläche 21 der Metalllage 2 vor. Die originäre Dicke d der Metalllage 2 ist geringer als die Dicke D der Metalllage 2 im ringförmigen Bereich 6. Entsprechend ist auch die Gesamtdicke DD des Hitzeschildes im ringförmigen Bereich 6 größer als die Summe der Dicken der nicht geprägten Metalllagen 2 und 2'. Die zweite Metalllage 2', in Figur 4 oben dargestellt, weist oberhalb der Oberflächenstrukturierung 5 der Metalllage 2 einen durch eine Kröpfung 10 nach oben ausgestellten Bereich auf, um so Platz für die Oberflächenstrukturierung 5 zu schaffen. Das hier nicht dargestellte Befestigungsmittel liegt, nachdem es in die Öffnung 3 eingeführt wurde, auf einer glatten Auflagefläche, nämlich der nicht strukturierten Metalllage 2', auf.

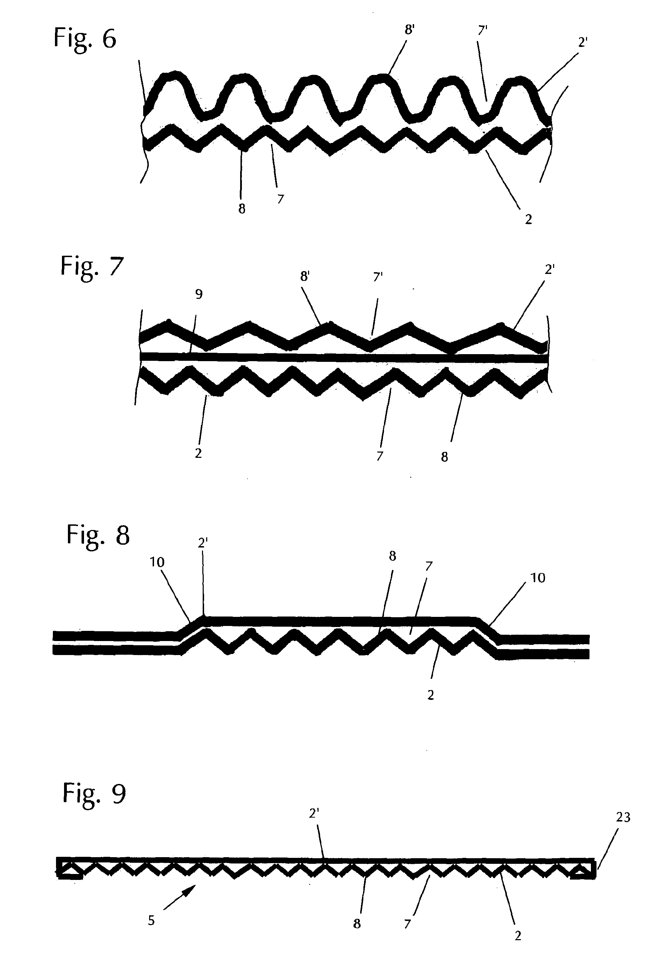

Figuren 5 und 6 zeigen Teilquerschnitte durch zweilagige Hitzeschilde im ringförmigen Bereich 6. Die Metalllagen 2 und 2' weisen jeweils Oberflächenstrukturierungen in diesem Bereich auf. Die Oberflächenstrukturierungen sind für die Metalllagen 2 und 2' unterschiedlich. Im Hitzeschild gemäß Figur 5 bestehen die Oberflächenstrukturierungen in zickzackförmigen Profilierungen, wobei der Abstand A zwischen den Scheitelpunkten 81 von zueinander benachbarten Erhebungen 8 in der unteren Metalllage 2 kleiner ist als der Abstand A' zwischen benachbarten Scheitelpunkten 81' der Metalllage 2'.
Im Hitzeschild gemäß Figur 6 entspricht die Oberflächenstrukturierung der unteren Metalllage 2 derjenigen der Figur 5, während die Strukturierung der Metalllage 2' ein wellenförmiges Profil besitzt.

In Figur 7 ist ein dreilagiger Hitzeschild gezeigt, bei dem die Oberflächenstrukturierung in den Metalllagen 2 und 2' im Wesentlichen derjenigen der Figur 5 entspricht. Zwischen den Metalllagen 2 und 2' ist hier aber eine Isolationsschicht 9 angeordnet, die beispielsweise aus wärmeisolierender Pappe besteht.

Figuren 8 und 9 zeigen Querschnitte durch zweilagige Hitzeschilde, in denen Oberflächenstrukturierungen nicht nur im Bereich um die Befestigungsmittelöffnungen, sondern auch in anderen Bereichen des Hitzeschildes vorhanden sind. Es kann sich dabei um Bereiche handeln, die während des Gebrauchs ebenso wie die Bereiche um Befestigungsmittelöffnungen 3 herum relativ starken mechanischen Beanspruchungen ausgesetzt sind. Die in Figur 8 gezeigte Ausgestaltung entspricht im Wesentlichen derjenigen der Figur 4, nur dass hier im Bereich der Oberflächenstrukturierung keine Öffnung vorhanden ist.

Figur 9 zeigt einen Querschnitt durch einen zweilagigen Hitzeschild zwischen zwei Randbereichen desselben. Die Metalllage 2 ist über den gesamten gezeigten Bereich vollflächig mit einer Oberflächenstrukturierung 5 mit einander abwechselnden Vertiefungen 7 und Erhebungen 8 versehen. Die Metalllage 2' weist dagegen keine Oberflächenstrukturierung auf. Zur Befestigung der Metalllagen 2 und 2' aneinander ist letztere im Bereich der Außenränder 23 um die Metalllage 2 herum gebogen (gebördelt). Üblicherweise wird die in Figur 9 gezeigte Hitzeschildanordnung auch noch dreidimensional verformt, um ihre Form an die Form des abzuschirmenden Gegenstandes anzupassen.

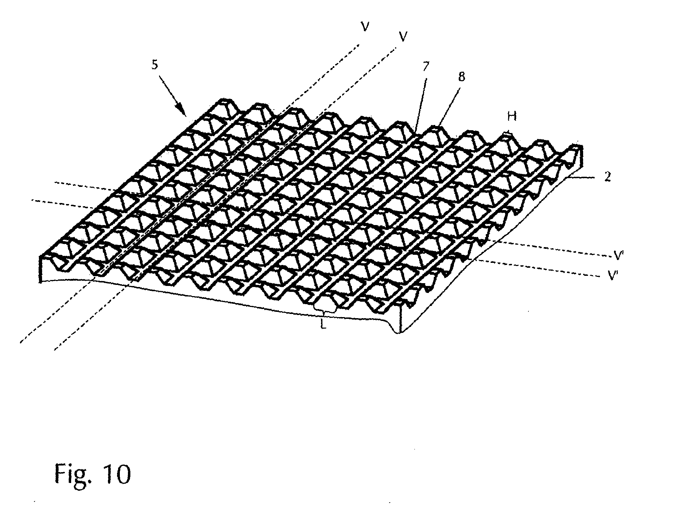

Figur 10 zeigt eine Teildraufsicht auf einen mit einer Oberflächenstrukturierung 5 versehenen Bereich einer Metalllage 2. Im Bereich der Oberflächenstrukturierung 5 wechseln sich Vertiefungen 7 und Erhebungen 8 miteinander ab. Hier sind Vertiefungen und Erhebungen so angeordnet, dass sie auf zwei Scharen sich rechtwinklig schneidender virtueller Linien verlaufen, nämlich den Linien V der ersten Schar und den Linien V der zweiten Schar. Auf diese Weise ergibt sich ein netzartiges Muster von Vertiefungen 7, zwischen denen die Erhebungen 8 angeordnet sind. Die Erhebungen 8 weisen hier die Form eines Pyramidenstumpfes auf mit einer Länge L der Grundflächen des Pyramidenstumpfes und einer Länge H der oberen Kanten. Auch dieses Strukturmuster kann beispielsweise durch Prägen hergestellt werden. In diesem Fall werden jedoch die Strukturen der Erhebungen und Vertiefungen und insbesondere die hier zur besseren Veranschaulichung sehr scharf konturierten Kanten der Pyramidenstümpfe nicht so deutlich ausgeprägt erscheinen, sondern eine eher abgerundete Form aufweisen.

## Patentansprüche

1. Hitzeschild (1) zum Abschirmen eines Gegenstandes gegen Hitze und/oder Schall mit wenigstens einer Metalllage (2) und wenigstens einer durch die wenigstens eine Metalllage (2) hindurch gehenden Öffnung (3) zur Aufnahme eines Befestigungsmittels (4), worin auf wenigstens einer der Oberflächen (21, 22) der wenigstens einen Metalllage (2) bereichsweise eine Oberflächenstrukturierung (5) vorgesehen ist, in deren Bereich die Metalllage (2) eine Dicke (D) aufweist, die größer ist als ihre originäre Dicke (d),
**dadurch gekennzeichnet,**
**dass** die Oberflächenstrukturierung (5) als sich ringförmig um die Öffnung (3) erstreckender Bereich (6) von sich abwechselnden Vertiefungen (7) und Erhebungen (8) ausgebildet ist, die auf wenigstens einer Schar im Wesentlichen parallel über die Gesamtausdehnung der Oberflächenstrukturierung (5) verlaufender virtueller gerader Linien (V) angeordnet sind.

2. Hitzeschild gemäß Anspruch 1,
**dadurch gekennzeichnet,**
**dass** der ringförmige Bereich (6) eine Breite in Radialrichtung um die Öffnung (3) von 0,4 bis 5 cm, bevorzugt 0,6 bis 2,5 cm und insbesondere 0,8 bis 2 cm, aufweist.

3. Hitzeschild gemäß Anspruch 1 oder 2,
**dadurch gekennzeichnet,**
**dass** Vertiefungen (7) und Erhebungen (8) sich in der Erstreckungsrichtung der Linien abwechseln.

4. Hitzeschild gemäß Anspruch 3,
**dadurch gekennzeichnet,**
**dass** die Vertiefungen (7) und Erhebungen (8) auf zueinander benachbarten Linien jeweils versetzt zueinander angeordnet sind.

5. Hitzeschild gemäß Anspruch 1 oder 2,
**dadurch gekennzeichnet,**
**dass** die Oberflächenstrukturierung (5) aus wellenartig parallel zueinander verlaufenden Vertiefungen (7) mit dazwischen liegenden erhöhten Rippen (8) gebildet wird.

6. Hitzeschild nach einem der Ansprüche 1 bis 4,
**dadurch gekennzeichnet,**
**dass** die Oberflächenstrukturierung Vertiefungen (7) aufweist, die entlang mindestens zweier sich schneidender Scharen virtueller gerader Linien (V, V) verlaufen.

7. Hitzeschild nach Anspruch 6,
**dadurch gekennzeichnet,**
**dass** die sich schneidenden Linien in einem Winkel von 30 bis 150 °, bevorzugt 45 bis 135 °, besonders bevorzugt 80 bis 100 ° und insbesondere 90 ° zueinander verlaufen.

8. Hitzeschild nach Anspruch 6,
**dadurch gekennzeichnet,**
**dass** die Vertiefungen (7) auf drei Scharen virtueller gerader Linien verlaufen, die sich bevorzugt in einem Winkel von 60 ° schneiden.

9. Hitzeschild nach einem der vorhergehenden Ansprüche,
**dadurch gekennzeichnet,**
**dass** die Vertiefungen (7) einen trapezförmigen, dreieckigen, gerundeten oder rechteckigen Querschnitt aufweisen.

10. Hitzeschild nach einem der vorhergehenden Ansprüche,
**dadurch gekennzeichnet,**
**dass** die Erhebungen (8) ein kuppenförmiges, rechteckiges, dreieckiges oder trapezförmiges Querschnittsprofil aufweisen.

11. Hitzeschild gemäß Anspruch 6 bis 8,
**dadurch gekennzeichnet,**
**dass** die Erhebungen (8) die Form eines Polyeder- und insbesondere Pyramidenstumpfes aufweisen.

12. Hitzeschild nach einem der vorhergehenden Ansprüche,
**dadurch gekennzeichnet,**
**dass** die Höhe der Erhebungen (8) und/oder die Tiefe der Vertiefungen (7) sich über den ringförmigen Bereich (6) ändert.

13. Hitzeschild nach einem der vorhergehenden Ansprüche,
**dadurch gekennzeichnet,**
**dass** die Oberflächenstrukturierung auf beiden Oberflächen (21, 22) der wenigstens einen Metalllage (2) vorgesehen ist.

14. Hitzeschild nach einem der vorhergehenden Ansprüche,
**dadurch gekennzeichnet,**
**dass** die Oberflächenstrukturierung (5) durch Prägen erzeugt ist, wobei die Prägetiefe zwischen 0,4 und 1 mm, bevorzugt 0,65 und 0,9 mm und insbesondere zwischen 0,75 und 0,85 mm liegt.

15. Hitzeschild nach einem der vorhergehenden Ansprüche,
**dadurch gekennzeichnet,**
**dass** der Abstand (A) zwischen den Scheitelpunkten (81) benachbarter Erhebungen (8) in einem Bereich von 1 bis 4 mm, bevorzugt 1,5 bis 3 mm und insbesondere 1,6 bis 2,5 mm liegt.

16. Hitzeschild nach einem der Ansprüche 11 bis 15,
**dadurch gekennzeichnet,**
**dass** die Seitenlänge (L) an der Grundfläche des Polyederstumpfes zwischen 1 und 3 mm, bevorzugt zwischen 1,5 und 2,5 mm und besonders bevorzugt zwischen 1,6 und 2,0 mm liegt.

17. Hitzeschild nach einem der Ansprüche 11 bis 16,
**dadurch gekennzeichnet,**
**dass** die Länge (H) der oberen Kanten des Polyederstumpfes bei 0,1 bis 0,5 mm und bevorzugt bei 0,2 bis 0,3 mm liegt.

18. Hitzeschild nach einem der Ansprüche 14 bis 17,
**dadurch gekennzeichnet,**
**dass** die Oberflächenstrukturierung (5) auf wenigstens einer der Oberflächen (21, 22) der wenigstens einen Metalllage (2) zusätzlich außerhalb des ringförmigen Bereiches (6) vorhanden ist.

19. Hitzeschild nach einem der vorhergehenden Ansprüche,
**dadurch gekennzeichnet,**
**dass** er zwei Metalllagen (2, 2') mit einer zwischen diesen angeordneten nichtmetallischen Isolationsschicht (9) umfasst, wobei die Isolationsschicht bevorzugt im Bereich des wenigstens einen ringförmigen Bereiches (6) ausgespart ist.
